# EUROPEAN PATENT SPECIFICATION

(11) **EP 2 688 354 B1**
(45) Date of publication and mention of the grant of the patent: **10.07.2019**
(21) Application number: 12177350.1
(22) Date of filing: 20.07.2012
(51) Int. Cl.: H04W 76/12, H04W 72/00

(54) **RADIO ACCESS POINT FOR MANAGING USER-PLANE OF A PLURALITY OF BEARERS**
FUNKZUGANGSPUNKT FÜR DIE VERWALTUNG DER BENUTZEREBENE MEHRERER LAGER
POINT D'ACCÈS RADIO POUR LA GESTION DU PLAN D'UTILISATEUR DE PLUSIEURS PORTEURS

(43) Date of publication of application: 22.01.2014
(73) Proprietor: Alcatel Lucent, 91620 Nozay (FR)
(72) Inventor: Catte, Jean-François, 91620 Nozay (FR)
(74) Representative: Lebkiri, Alexandre

(56) References cited:
- US-A1- 2011 320 608
- US-A1- 2012 082 089
- "3rd Generation Partnership Project; Technical Specification Group Core Network and Terminals; General Packet Radio System (GPRS) Tunnelling Protocol User Plane (GTPv1-U) (Release 11)", 3GPP STANDARD; 3GPP TS 29.281, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V11.3.0, 25 June 2012 (2012-06-25), pages 1-26, XP050580762, [retrieved on 2012-06-25]

## Description

### TECHNICAL FIELD

The present invention relates to a first node of a wireless network adapted to manage user-plane transmitted over a plurality of bearers established for ingress flow between said first node and a second node of said wireless network. The invention also relates to a corresponding method.

Such first node is in a non-limitative example an eNodeB of a LTE wireless network.

### BACKGROUND OF THE INVENTION

A first node of a wireless network adapted to manage user-plane transmitted over a plurality of bearers established for ingress flow between said first node and a second node of said wireless network, well-known by the man skilled in the art, comprises a processing unit which handles all said user-planes. One problem of this solution is that even a high capacity fist node which is needed when thousands of bearers have to be handled simultaneously may not be sufficient. Moreover, such solution leads to a single-point of failure for all bearers.

The documents US 2012/082089 A1 entitled "Method and apparatus for processing GTP triggered messages" and US 2011/320608 A1 entitled "Method and apparatus for allocating bundles of sessions in a network element" are known from the prior art.

### SUMMARY OF THE INVENTION

The invention is defined in the independent claims. Preferred embodiments are defined in the dependent claims.

It is an object of the invention to provide a first node of a wireless network adapted to manage user-plane transmitted over a plurality of bearers established for ingress flow between said first node and a second node of said wireless network, which permits to handle a high numbers of bearers while maintaining a good reliability of the management of the user-plane of all the bearers.

To this end, there is provided a first node of a wireless network comprising a radio access network and an enhanced packet core, said first node being adapted to manage user-plane of a plurality of bearers established for ingress flow between said first node and a second node of said wireless network, said first node comprising a first processor, a front-end processor and a plurality of end-points:
- said first processor being adapted to :
   ∘ define subsets of contiguous tunnel endpoint identifier within a set of tunnel endpoint identifiers;
   ∘ allocate a subset of contiguous tunnel endpoint identifier to each end-point to define a virtual path for said ingress flow by means of at least one bit of the contiguous tunnel endpoint identifier;
   ∘ chose a tunnel endpoint identifier within a subset and send said tunnel endpoint identifier to said second node for a bearer to be established for said ingress flow between said first node and said second node ;
   ∘ signal said tunnel endpoint identifier chosen to the corresponding end-point;
- said front-end processor being adapted to:
   ∘ receive the user-plane from said second node through the bearer for which said tunnel endpoint identifier has been chosen ;
   ∘ route the user-plane of said bearer to an end-point through the virtual path corresponding to the subset comprising said tunnel endpoint identifier;
- said end-points being adapted to process the user-plane received from said front-end processor.

As we will see in further details, the method proposes a simple architecture of the first node which permits to distribute the user-plane processing of a plurality of bearers through a plurality of virtual path over a plurality of processing units.

In addition to the main features aforementioned in the previous paragraph, the first node according to the invention may also have one or more of the additional features below, taken individually or in any technically feasible combination:
- the user-plane are transported over GTP tunnels;
- one or a plurality of sets of tunnel endpoint identifiers is associated for one or a plurality of IP addresses associated to the first node;
- the first node is a radio access point of the radio access network;
- the second node is a radio access point of the radio access network;
- the second node is a node of the enhanced packet core ;
- the first node is a node of the enhanced packet core and the second node is a radio access point of the radio access network.

In addition, the invention relates to a method for managing user-plane transmitted over a plurality of bearers established for ingress flow between a first node of a wireless network comprising a radio access network and an enhanced packet core, and a second node of said wireless network, said first node comprising a first processor unit, a front-end processor and endpoints, said method comprising:
- choosing a tunnel endpoint identifier within a subset and send said tunnel endpoint identifier to said second node for a bearer to be established for said ingress flow between said first node and said second node ;
- signaling said tunnel endpoint identifier chosen to the corresponding end-point;
- receiving the user-plane from said second node through the bearer for which said tunnel endpoint identifier has been chosen ;
- routing the user-plane of said bearer to an end-point through the virtual path corresponding to the subset comprising said tunnel endpoint identifier ; and
- processing the user-plane received from said front-end processor.

In a non-limitative embodiment, said method comprises the initial steps of:
- defining subsets of contiguous tunnel endpoint identifier within a set of tunnel endpoint identifiers;
- allocating a subset of contiguous tunnel endpoint identifier to each end-point to define a virtual path for ingress flow by means of at least one bit of the contiguous tunnel endpoint identifier.

In addition, there is provided a computer program product for a first node of a wireless network, comprising a set of instructions, which when loaded into said first node, causes the first node to carry out the method for managing user-plane as characterized above.

In addition, there is provided a non transitory computer readable medium comprising a computer program product comprising a set of instructions, which when loaded into a first node of a wireless network, causes said first node to carry out the method for managing user-plane as characterized above.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1a illustrates a wireless network comprising a first node of a wireless network for managing user-plane transmitted over a plurality of bearers according to a first non-limitative embodiment of the invention ; Fig.1b illustrates a wireless network comprising a first node of a wireless network for managing user-plane transmitted over a plurality of bearers according to a second non-limitative embodiment of the invention ;
Fig.1c illustrates a wireless network comprising a first node of a wireless network for managing user-plane transmitted over a plurality of bearers according to a third non-limitative embodiment of the invention ;
- Fig.2 illustrates a schematic organization chart of the method which is carried out by the first node of the figures 1a, 1b and 1c; and
- Fig. 3 illustrated schematically the functions performed by the different elements of the first node of the figures 1a, 1b and 1c.

### DESCRIPTION OF EMBODIMENTS OF THE INVENTION

In the following description, well-known functions or constructions by the man skilled in the art are not described in detail since they would obscure the invention in unnecessary detail.

The present invention relates to a first node Nd1 of a wireless network NTW adapted to manage user-plane U transmitted over a plurality of bearers Br established for ingress flow between said first node and a second node Nd2 of said wireless network.

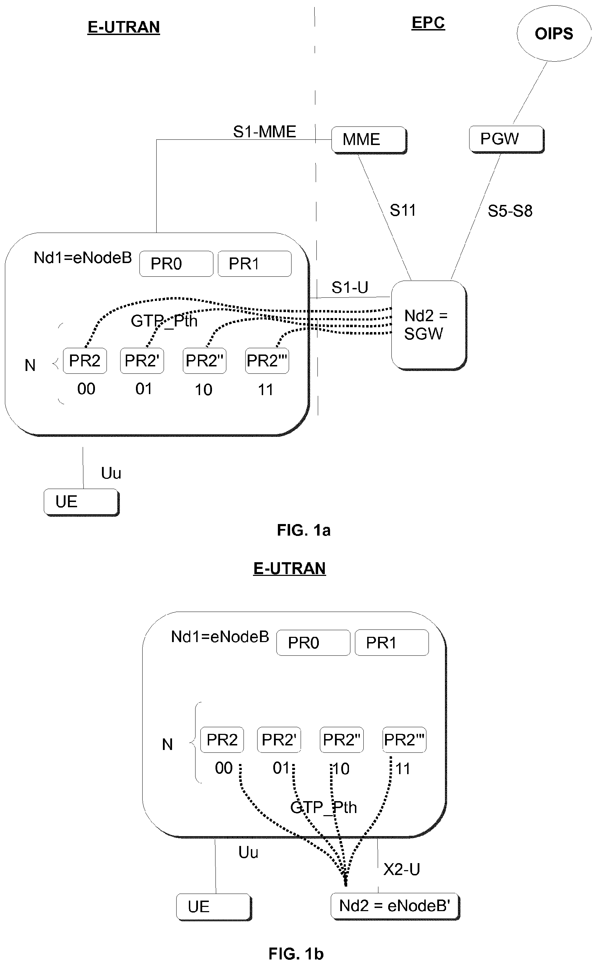

In a first non-limitative embodiment illustrated in Fig. 1a, the first node Nd1 is a radio access point eNodeB of a radio access network E-UTRAN, the ingress flow is a downlink communication and the second node Nd2 is a node of an enhances packet core EPC such as in a non-limitative example a serving gateway SGW. The eNodeB is therefore the receiving side, and the node Nd2 is the transmitting side.
It is to be reminded that communications from the EPC to the UEs via the E-UTRAN are called downlink communication. Communications from the UEs via the E-UTRAN to the EPC are called uplink communications.

In a second non-limitative embodiment illustrated in Fig. 1b, the first node Nd1 is a radio access point eNodeB of said radio access network E-UTRAN and the second node Nd2 is another eNodeB' of said radio access network E-UTRAN. The ingress flow is therefore a direct communication from the eNodeB to a peer eNodeB' (peer communication meaning direct communication eNodeB to eNodeB').

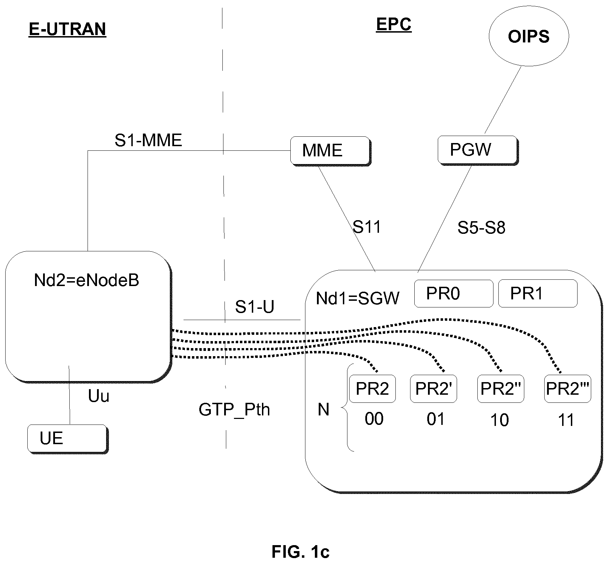

In a third non-limitative embodiment illustrated in Fig. 1c, the first node Nd1 is a node of the enhanced packet core EPC, the ingress flow is an uplink communication and the second node Nd2 is a radio access point eNodeB of said radio access network E-UTRAN. The node of the EPC is therefore the receiving side, and the eNodeB is the transmitting side.

The wireless network which is in a non-limitative embodiment a LTE network (or LTE advanced network) comprises as illustrated in Fig. 1:
A radio access network called E-UTRAN comprising a plurality of radio access points, which are called eNodeB and a plurality of User Equipments UE. The communication between an eNodeB and a UE is taken care through an interface called Uu which comprises a L2 layer and a physical layer called L1.

The L2 layer comprises the following protocols:
- Packet Data Convergence Protocol Layer PDCP, in particular responsible for handover management and transmission of PDU packets to the RLC layer;
- Radio Link Control Layer RLC which reformats the PDCP PDU packets according in particular to the MAC layer transport block size, said size depending on the bandwidth requirements, transmission power requirements, modulation scheme and type of application ;
- Medium Access Control Layer MAC responsible for distributing the available bandwidth to a number of active UEs, for correcting data received in the RLC data, and for mapping the RLC data through logical channels onto transport channels for the physical layer.

- An Enhanced Packet Core called EPC comprising a plurality of nodes Nd, said nodes Nd being in particular :
   - **a)** A mobility management entity MME which is in particular responsible for providing the control plane which comprises protocols for control and support of the user plane functions:
      ∘ controlling the network access connections, such as attaching to and detaching from the network ;
      ∘ controlling the attributes of an established network access connection, such as activation of an IP address;
      ∘ controlling the routing path of an established network connection in order to support user mobility;
      ∘ controlling the assignment of network resources to meet changing user demands.
      ∘ controlling the user plane tunnels establishment and for establishing user plane bearers between eNodeB and SGW.

The communication between the MME and an eNodeB is taken care through an S1 protocol stack also called S1-MME stack comprising a physical protocol such as in a non-limitative embodiment the Ethernet protocol, the transport IP protocol (optionally V4 or V6 IPSEC protocol), the Stream Control Transmission Protocol also called SCTP and the S1 Application Protocol also called S1AP protocol. The S1-MME stack supports an S1-C interface (also called S1-MME interface) for exchanges with an eNodeB which are for Control-Plane.

Hence, the MME comprises the S1 protocol stack to support the S1-MME interface with eNodeB, and a S11 control plane stack to support an S11 interface with a serving gateway SGW (described below).

The S11 control plane stack comprising the IP protocol, UDP protocol and the GTPv2-C (see http://www.3gpp.orq/ftp/Specs/html-info/29274.htm) protocol (GRPS tunneling protocol for the control plane). The GTPv2-C protocol is responsible for creating, maintaining and deleting tunnels. It is used for the control plane path management, tunnel management and mobility management.

These protocols are well-known by the man skilled in the art and won't be further described here.
- **b)** A serving gateway SGW. The SGW routes and forwards user data packets, while also acting as the mobility anchor for the user plane during inter-eNodeB handovers and as the anchor for mobility between LTE and other 3GPP technologies.

The communication between the SGW and an eNodeB is taken care through an S1 data plane stack comprising a physical protocol such as in a non-limitative embodiment the Ethernet protocol, the transport IP protocol (optionally V4 or V6 IPSEC protocol), the user IP protocol, and the UDP (User Datagram) protocol and the GTPv1-U protocol (GPRS tunneling protocol for the user plane). The S1 data plane stack supports an S1-U (3GPP reference, see http://www.3gpp.orq/ftp/Specs/html-info/29281.htm) interface for exchanges with an eNodeB which are for User-Plane.

Hence, the SGW comprises the S1 data plane stack to support the S1 user plane interface S1-U with eNodeB, and also the S11 control plane stack to support a S11 interface with MME, and a S5/S8 control and data plane to support a S5/S8 interface with PGW.

The GTPv1-U protocol tunnels user data between eNodeB and the SGW as well as between the SGW and the PGW and encapsulates all end user IP packets.

In the following description the term GTP shall be understood as meaning GTPv1-U.
- **c)** A PDN Gateway PGW: The PDN Gateway is the point of exit and entry of traffic for the UE.

Other nodes Nd are not described here.

It is to be reminded that user-plane comprises user data.

At radio access network side (eNodeB-UE), the user-plane comprises the L2 layer and the L1 layer mentioned above.

At backhaul side, the user-plane comprises the layers mentioned above (physical, IP, UDP and GTP).

User-Plane dedicated to a UE is transmitted over a bearer Br established for ingress flow between a first node Nd1 and a second node Nd2 of said wireless network.

In the first non-limitative embodiment (Nd1 = eNodeB, Nd2= SGW), such User-Plane comprises in non-limitative example some user IP packets coming from a webpage to which a UE wants to connect, or some user IP packets coming from a VOIP service, thus some user IP packets coming from some operator's IP services OIPS as illustrated in Fig. 1.

In the second non-limitative embodiment (Nd1 = eNodeB, Nd2=eNodeB'), such User-Plane comprises in non-limitative example some user IP packets coming from said another eNodeB'.

In the third non-limitative embodiment (Nd1 = SGW, Nd2= eNodeB), such User-Plane comprises in non-limitative example some user IP packets coming from an email which a UE wants to transmit, or some user IP packets coming from a VOIP message an UE wants to send, thus some user IP packets coming from an UE.

More particularly, the user IP packets are tunneled:
- In the first non-limitative embodiment (Nd1 = eNodeB , Nd2= SGW) on the EPC side, between the SGW and the eNodeB using the GTP protocol after having said user IP packets encapsulated by means of all the other protocols of the S1-U interface (Physical, transport IP, user IP, UPD)for transmission from SGW to the eNodeB, In this first-case, the GTP protocol is used on the S1-U interface between the eNodeB and SGW and on the S5/S8 interface between the SGW and PGW as above-described.
   Thereafter, the user IP packets are desencapsulated on the EPC side and then encapsulated again on the radio access network side E-UTRAN by means of the Uu protocols (PDCP, RLC, MAC) for transmission from the eNodeB to the Ue requiring the user data.
- In the second non-limitative embodiment (Nd1= eNodeB, Nd2=eNodeB') on the E-UTRAN side between an eNodeB and another eNodeB' using the GTP protocol for transmission from another eNodeB' to the first eNodeB.

In this second case (eNodeB-eNodeB), the GTP protocol is used on an X2-C interface for Control-Plane and on an X2-U interface for User-Plane between the eNodeB and another eNodeB'.
- In the third non-limitative embodiment (Nd1 = SGW, Nd2=eNodeB) between an eNodeB and said EPC node using the GTP protocol after having said user IP packets encapsulated by means of all the other protocols of the Uu interface (PDCP, RLC, MAC) for transmission from the user equipment Ue requiring the sending of the user data to said eNodeB, and after having the user IP packets desencapsulated on the E-UTRAN side and then encapsulated them again on the EPC side by means of the S1-U protocols (Physical, transport IP, user IP, UPD) for transmission from the eNodeB to said EPC node.

For a communication, first the bearer is allocated Br; secondly the User-Plane is transmitted over said bearer Br.

It is to be noted that a bearer is allocated when for example, an UE wants to connect the first time to an eNodeB (it goes from an idle mode to a connected mode) or in another example during handover procedure.

In order to allocate a bearer for said user-plane, a tunnel endpoint identifier TEID is defined by the receiving side and sent to the sending side. In the first non-limitative embodiment and in the second non-limitative embodiment where the eNodeB is the first node Nd1, said eNodeB will define such TEID.

In the third non-limitative embodiment where a node of the EPC is the first node Nd1, said node will define such TEID.

In a given direction, the bearer Br transports user-plane packets to the tunnel endpoint identified by a TEID. A bearer is well known by the man skilled in the art (a definition of said bearer may be found in 3GPP 36.300§13.1).

GTP tunnels are unidirectional. Therefore, the TEID also called GTP TEID allows identifying a given bearer Br in a given direction.

It is to be noted that in the GTP protocol, a GTP message comprises a GTP header comprising a tunnel endpoint identifier field, where the value of said tunnel endpoint identifier can be setup.

Therefore, for a plurality of ingress flows, different tunnel endpoint identifiers TEID will be allocated to different bearers Br.

In order to allocate and use such tunnel endpoint identifiers TEID, a first node Nd1 comprises a first processor PR0, a front-end processor PR1 and end-points N illustrated PR2, PR2', PR2", PR2"\ Said end-points are also called GTP end-points or GTP SAP (Service Access Point).

Said first processor PR0 is adapted to:
**1)** define multiple subsets S of contiguous tunnel endpoint identifiers TEID within a set SB of tunnel endpoint identifiers.

In a non-limitative embodiment, one or a plurality of sets SB of tunnel endpoint identifiers TEID is associated for one or a plurality of IP addresses associated to the first node Nd1.

Therefore, one set may be allocated for one IP address or for a group of IP addresses, or a plurality of IP sets may be allocated for one IP address or for a group of IP addresses, or the full range of TEID (within one set) may be allocated to all the IP addresses.

It is to be noted that in the case of an eNodeB, it may handle a plurality of IP addresses, depending on the number of Ethernet cards it contains or when said eNodeB handles multiple PLMNIDs (Public Land Mobile Network) for E-UTRAN sharing (sharing of a given eNodeB by multiple operators) or for any other reason.

Same applies to SGW which may also handle a plurality of IP addresses. Then, subsets S of contiguous tunnel endpoint identifier TEID are defined within said set SB.

In a non-limitative example, a set is coded on 32 bits, that is to say said set if composed of 2³²-1 bits, or less.

In another non-limitative example, said set is coded on 12 bits.

For example, four the subsets S are defined:
S1 =0-1023 ; S2=1024-2047 ; S3=2048-3071 ; S4=3072-4095.

**2)** allocate a subset S of contiguous tunnel endpoint identifier TEID to each end-point N to define a virtual path GRP_Pth for ingress flow by means of at least one bit of the contiguous tunnel endpoint identifier TEID.

The allocation of a subset of contiguous tunnel endpoint identifier TEID to an End-point N, means that all bearers belonging to the same subset can be considered as belonging to a same GTP virtual path as their user-plane are routed and processed by the same End-point. A virtual path GTP_Pth (illustrated in doted lines in Fig. 1a, Fig. 1b and Fig. 1c) is defined as being a path for routing user-plane of bearers from the second node Nd2 (a node of the EPC or a peer eNodeB 'or an eNodeB) to the first node Nd1 (more particularly to an end-point of the eNodeB or of an end-point of the EPC).

In a non-limitative example, if a first Node Nd1 is required to process 4096 traffic bearers (S1-U bearers), the radio access point comprises four unit processors PR2, PR2', PR2", PR2'''.

The first subset of TEID 0 to 1023 is allocated to the first unit processor PR2, the second subset of TEID 1024 to 2047 is allocated to the second unit processor PR2', the third subset of TEID 2048 to 3071 is allocated to the third unit processor PR2", and the fourth subset of TEID 3072 to 4095 is allocated to the fourth unit processor PR2'''.

In a non-limitative embodiment, the virtual path GTP_Pth is coded on the most significant bits MSB of the set of bits used for allocating a TEID number. Hence, for example, when the set of bits is composed of 12 bits, the most significant bits MSB, for example the bits #10 and #11 are used to code the virtual path GTP_Pth whereas all the 12 bits are used to define a TEID number for a bearer.

Hence, when the allocation used two bits of the TEID (here the two MSB), the following table summarizes the allocation.

| End-point | Bit #11 | Bit #10 | Bit #9............................................... Bit #0 |
|---|---|---|---|
| PR2 | 0 | 0 | values of TEID 0 to 1023 |
| PR2' | 0 | 1 | values of TEID 1024 to 2047 |
| PR2" | 1 | 0 | values 2048 to 3071 |
| PR2"' | 1 | 1 | values 3072 to 4095 |

It is to be noted that when only one bit is used, two End-points may be used.

**3)** Chose a tunnel endpoint identifier TEID within a subset S and send said tunnel endpoint identifier TEID to the second node Nd2 for associating said tunnel endpoint identifier TEID to a bearer Br to be established for ingress flow of a user-plane between said first node Nd1 and said second Node Nd2. The TEID is sent via the S1-AP or X2-AP control interface.

By choosing a subset S, one chooses the End-point which will process the user-plane will be transmitted.

It is to be noted that the choice is performed when the bearer is created, either at initial bearer setup or in case of mobility.

It is also to be noted that the TEID value chosen by the receiving node Nd1 may depend on a load balancing algorithm. Also, it may be adapted depending on possible failures of the PR2, Pr2' etc. processing entities for reliability question.

**5)** Signal said TEID chosen to the end-point (PR2 or PR2' or PR2" or PR2''') comprising said tunnel identifier TEID chosen. Hence, this step permits the concerned end-point to know on which bearer it will receive the user data, the concerned end-point N being the processing unit corresponding to the allocated subset S of TEID to which the TEID chosen belongs to.

The TEID is signaled to peer side of the tunnel via the S1-C interface for S1 case and via X2-C for X2 case.

Hence, the first processor PR0 handles the S1-C/X2-C, S1-AP/X2-AP interfaces. It interfaces with the MME (via S1AP), with the peer eNodeB (via X2AP) and with UE (via RRC) as a minimum.

Said front-end processor PR1 is adapted to:
**4)** Receive the user-plane U from said second node Nd2 over the bearer associated to said tunnel endpoint identifier TEID chosen.

The front-end processor PR1 receives the user-plane U from said node SGW or eNodeB' or eNodeB through the bearer associated to said tunnel endpoint identifier TEID chosen.

More particularly, it receives the user IP packets encapsulated in the EPC (in the case of the first non-limitative embodiment) or in the E-UTRAN (in the case of the second or third embodiments).

Thereafter, the front-end processor PR1 desencapsulates the user IP packets received until the GTP layer in order to retrieve the TEID corresponding to the allocated bearer Br, said TEID being in the GTP header as previously mentioned). The desencapsulation takes into account the different protocols of the S1-U which have been mentioned previously (Ethernet, transport IP, optionally IPSEC, GTP) and which have been used to encapsulate the user IP packets before the transmission from the second node Nd2 to the first node Nd1.

**5)** route the user-plane of said bearer to one of the end-point PR2, PR2', PR2", PR2''' through the virtual path GTP_Pth corresponding to the subset S comprising said tunnel identifier TEID chosen.

The front-end processor PR1 routes the user-plane to the processor unit corresponding to said tunnel endpoint identifier TEID.

It means that it routes the desencapsulated user IP packets to the right processor unit PR2 or PR2 or PR2" or PR2'''.

Said End-points PR2, PR2', PR2", PR2''' are adapted to:
**6)** process the user-plane received from said front-end processor PR1.

In the case of the first non-limitative embodiment (Nd1= eNodeB, Nd2=SGW), the process comprises the encapsulation of the user IP packets with at least the PDCP protocol on the E-UTRAN side for the first so that they may be transmit over the air to the UE. One can find a definition of the overall LTE u-plane protocol stack in 3GPP 23401 §5.1.2.

The same applies for the second non-limitative embodiment (Nd1=eNodeB, Nd2=eNodeB').

Hence, when a user-plane is to be transmitted from a second node Nd2 to a first Node Nd1 of the wireless network, the following method M for distributing user-plane U processing of a plurality of bearers Br to be established for ingress flow between said first node Nd1 and said second node Nd2 is performed.

It is to be reminded that when the ingress flow refers to a downlink traffic, the second node Nd2 is a node of the EPC or an eNodeB referenced eNodeB' of the E-UTRAN, and the first node Nd1 an eNodeB of the E-UTRAN, whereas when the ingress flow refers to an uplink traffic, the second node Nd2 is an eNodeB of the E-UTRAN and the first node is a node of the EPC.

When the second node Nd2 which is the transmitter node wishes to transmit the user-plane dedicated to an UE or originating from said UE to a receiver, it will transmits said user-plane over the bearer associated with the tunnel endpoint identifier TEID chosen by said second node Nd2.

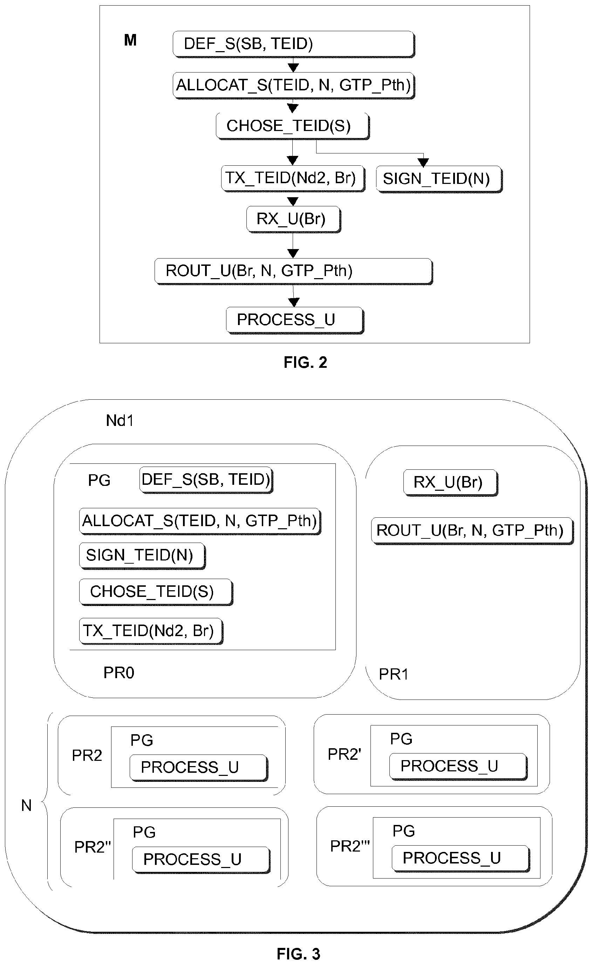

The following steps of the method M are performed by the receiving node Nd1.
- Choosing a tunnel endpoint identifier TEID within a subset S (step illustrated CHOSE_TEID(S) in Fig. 2) and sends the tunnel endpoint identifier value TEID chosen to the second node Nd2 via the S1-U/X2-U interfaces, and more particularly using the S1AP/X2AP protocols to inform them about the TEID which is associated to the bearer to be used for ingress flow (step illustrated TX_TEID(Nd2, Br) in Fig. 2).
- Signaling the TEID chosen to the right end-point unit processor PR2, PR2', PR2", PR2''' via the S1-C/X2-C interface (step SING_TEID(N). The transmitting node Nd2 sends back the user-plane through the bearer Br established for ingress flow and corresponding to the TEID identified.
- Receiving the user-plane U from said second node Nd2 through the bearer associated to said tunnel endpoint identifier TEID chosen (step illustrated RX_U(Br)) in Fig. 2).
- Routing the user-plane to the processor unit corresponding to said tunnel endpoint identifier TEID chosen. In a non-limitative example, the routing uses a serial rapid IO protocol between the end-front processor PR1 and the End-points (step illustrated ROUTE_U(Br, N, GTP_Pth) in Fig. 2). Of course, before the routing step or for routing purpose, it verifies the virtual path GTP_Pth to be used for the user-plane received from the transmitting node according to the tunnel endpoint identifier value TEID and more particularly to the bit field reserved (in the above example bits #10 and bit #11 of the 12 bits used for the TEID value) for the subset associated to the different processor unit PR2, PR2', PR2"; PR2''', bit field which defines the different virtual paths GTP_Pth.
- Processing the user-plane received..That is to say, in the first and second non-limitative embodiments (Nd1 = eNodeB), it will encapsulate the data of the user-plane with at least the PDCP protocol in order to send the user IP packets over the air. (step illustrated PROCESS_U in Fig. 2).

Of course, as explained before, as initial steps, the method M comprises;
- defining subsets S of contiguous tunnel endpoint identifier TEID within a set SB of tunnel endpoint identifiers (step illustrated DEF_S(SB, TEID in Fig. 2 and Fig. 3); and
- allocating a subset S of contiguous tunnel endpoint identifier TEID to each end-point PR2, PR2', PR2", PR2''' to define a virtual path GTP_Pth for ingress flow by means of at least one bit of the contiguous tunnel endpoint identifier TEID (step illustrated ALOCAT_S(TEID, N, GTP_Pth) in Fig. 2 and Fig. 3).

Fig. 3 illustrates schematically the different functions which are performed by the different elements PR0, PR1, N of the first node Nd1.

The functions of the various elements shown in the figures 1a, 1b and 1c, including any functional blocks labeled as "PR" or "N" for processor or processor unit, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, system on chip SoC, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is to be understood that the present invention is not limited to the aforementioned embodiments and variations and modifications may be made without departing from the scope of the invention. In the respect, the following remarks are made.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A person of skill in the art would readily recognize that steps of various above-described methods can be performed by programmed computers. Herein, some embodiments are also intended to cover program storage devices, e.g., digital data storage media, which are machine or computer readable and encode machine-executable, wherein said instructions perform some or all of the steps of said above-described methods. The program storage devices are therefore non transitory computer readable media and may be, e.g., digital memories, magnetic storage media such as a magnetic disks and magnetic tapes, hard drives, or optically readable digital data storage media. The embodiments are also intended to cover computers programmed to perform said steps of the above-described method.

One or a plurality of computer program products PG as illustrated in Fig. 3 can be contained in the radio access point eNodeB, said the radio access point eNodeB comprising a front-end processor PR1 and a plurality of processor units N. A processor unit N comprises one or a plurality of processors. In Fig. 3, a plurality of computer program products PG is contained in the front-end processor PR1 and in the processor units N.

The computer program products PG comprise a set of instructions.

Thus, said set of instructions contained, for example, in a radio access point memory, may cause the radio access point eNodeB to carry out the different steps of the method M.

Hence, some embodiments of the invention may comprise one or a plurality of the following advantages:
- The bearers' identifiers TEID of ingress packets (packet received by the first node Nd1) are allocated by the first node Nd1 itself which receives all the packets coming from the second node Nd2 and dedicated/coming from to the UE. It permits the receiving side to distribute and load balance the traffic bearers on multiple processing entities, i.e. on the end-points, because selecting a TEID corresponds to select a specific processing entity. Hence, it permits to distribute user-plane U processing of a plurality of bearers Br to be established for ingress flows between said receiving side Nd1 and said transmitting side Nd2 ;
- Systems with higher capacity by means of said means of distribution (first processor, front-end processor and GTP end-points) may be implemented ;
- multiple processing entities distribution permits to make products (eNodeB, SGW etc.) hosting the above described functions with expandable capacity by adding some hardware modules, each comprising one or a plurality of end-points ;
- Family of products (eNodeB, SGW etc.) hosting the above described functions with varying capacities according to the performance of the end-points may be implemented ;
- It permits to increase the receiving node's reliability as it avoids having only one unique processor unit which manages all the user-planes between said receiving node and a transmitting node.
- The routing of the user-plane is simplified as when receiving user-plane, the receiving node Nd1 checks in the TEID value associated to the bearer used for ingress flow, that is to say the bit field reserved for the virtual path GTP_Pth. As only few bits are verified, the checking is very fast and very easy. The first node Nd1 groups together the user-planes dedicated to a particular end-point.
- As the bit field dedicated to define the virtual path GT_Pth comprises few bits, the memory used is reduced compared to a standard routing table which associates an address to each bearer.

## Claims

1. A first node (Nd1) of a wireless network comprising a radio access network and an enhanced packet core, said first node (Nd1) being adapted to manage user-plane (U) of a plurality of bearers (Br) established for ingress flow from a second node (Nd2) of said wireless network to said first node (Nd1), said first node (Nd1) comprising a first processor (PR0), a front-end processor (PR1) and a plurality of end-point unit processors (PR2, PR2', PR2", PR2'''):
- said first processor (PR0) being adapted to :
∘ define subsets (S) of contiguous tunnel endpoint identifiers within a set (SB) of tunnel endpoint identifiers;
∘ allocate a subset (S) of contiguous tunnel endpoint identifiers to each end-point unit processor (PR2, PR2', PR2", PR2''') to define a virtual path for said ingress flow by means of at least one bit of the contiguous tunnel endpoint identifiers;
o chose a tunnel endpoint identifier within a subset (S) and send said tunnel endpoint identifier to said second node (Nd2) for a bearer (Br) to be established for said ingress flow from said second node (Nd2) to said first node (Nd1);
∘ signal said tunnel endpoint identifier chosen to the corresponding end-point unit processor (PR2, PR2', PR2", PR2''').
- said front-end processor (PR1) being adapted to:
∘ receive the user-plane (U) from said second node (Nd2) through the bearer for which said tunnel endpoint identifier has been chosen ;
∘ route the user-plane (U) of said bearer to an end-point unit processor (PR2, PR2', PR2", PR2''') through the virtual path corresponding to the subset (S) comprising said tunnel endpoint identifier;
- said end-point unit processors (PR2, PR2', PR2", PR2''') being adapted to process the user-plane received from said front-end processor (PR1).

2. A first node (Nd1) according to claim 1, wherein the user-plane are transported over GPRS Tunneling Protocol, GTP, tunnels.

3. A first node (Nd1) according to claim 1 or claim 2, wherein one or a plurality of sets (SB) of tunnel endpoint identifiers is associated for one or a plurality of IP addresses associated to the first node (Nd1).

4. A first node (Nd1) according to any one of the previous claims, wherein the first node (Nd1) is a radio access point of the radio access network.

5. A first node (Nd1) according to claim 4, wherein the second node (Nd2) is a radio access point of the radio access network.

6. A first node (Nd1) according to claim 4, wherein the second node (Nd2) is a node of the enhanced packet core.

7. A first node (Nd1) according to any one of the previous claims 1 to 3, wherein the first node (Nd1) is a node of the enhanced packet core and the second node (Nd2) is a radio access point of the radio access network.

8. A method (M) for managing user-plane (U) transmitted over a plurality of bearers (Br) established for ingress flow from a second node (Nd2) of a wireless network to a first node (Nd1) of said wireless network, said wireless network comprising a radio access network and an enhanced packet core, said first node (Nd1) comprising a first processor unit (PR0), a front-end processor (PR1) and end-point unit processors (PR2, PR2', PR2", PR2'''), said method comprising:
- defining subsets (S) of contiguous tunnel endpoint identifiers within a set (SB) of tunnel endpoint identifiers;
- allocating a subset (S) of contiguous tunnel endpoint identifiers to each end-point unit processor (PR2, PR2', PR2", PR2''') to define a virtual path for ingress flow by means of at least one bit of the contiguous tunnel endpoint identifiers;
- choosing a tunnel endpoint identifier within a subset (S) and send said tunnel endpoint identifier to said second node (Nd2) for a bearer (Br) to be established for said ingress flow from said second node (Nd2) to said first node (Nd1) ;
- signaling said tunnel endpoint identifier chosen to the corresponding end-point unit processor (PR2, PR2', PR2", PR2''').
- receiving the user-plane (U) from said second node (Nd2) through the bearer for which said tunnel endpoint identifier has been chosen ;
- routing the user-plane (U) of said bearer to an end-point unit processor (PR2, PR2', PR2", PR2''') through the virtual path corresponding to the subset (S) comprising said tunnel endpoint identifier; and
- processing the user-plane received from said front-end processor (PR1).

9. A computer program product (PG) comprising a set of instructions, which when run by a first node (Nd1) of a wireless network, causes said first node (Nd1) to carry out the method for managing user-plane, as claimed in claim 8.

10. A non-transitory computer readable medium comprising a computer program product (PG) comprising a set of instructions, which when run by a first node (Nd1) of a wireless network, causes said first node (Nd1) to carry out the method for managing user-plane as claimed in claim 8.

## Patentansprüche

1. Ein erster Netzknoten (Nd1) eines drahtlosen Netzwerks bestehend aus einem Funkzugangsnetz und einem erweiterten Packet-Core, wobei der besagte Netzknoten (Nd1) so ausgelegt ist, dass er die Nutzerebene (U) einer Vielzahl von Trägern (Br) verwaltet, die für den einströmenden Datenfluss von einem zweiten Netzknoten (Nd2) des besagten drahtlosen Netzwerks zum besagten ersten Netzknoten (Nd1) eingerichtet wurde, wobei der erste Netzknoten (Nd1) einen ersten Prozessor (PRO), einen Front-End-Prozessor (PR1) und eine Vielzahl von Endpunkt-Einheit Prozessoren (PR2, PR2', PR", PR2''') umfasst.
- wobei der besagte erste Prozessor (PR0) so ausgelegt ist, dass er:
∘ Teilmengen (S) für zusammenhängende Tunnelendpunkt-IDs innerhalb einer Menge (SB) von Tunnelendpunkt-IDs definiert;
∘ eine Teilmenge (S) von zusammenhängenden Tunnelendpunkt-IDs jedem Endpunkt-Einheit Prozessor (PR2, PR2', PR2", PR2''') zuordnet zur Bestimmung eines virtuellen Pfades für den besagten einströmenden Datenfluss mittels mindestens eines Bits der zusammenhängenden Tunnelendpunkt-ID;
∘ eine Tunnelendpunkt-ID innerhalb einer Teilmenge (S) auswählt und die besagte Tunnelendpunkt-ID an den besagten zweiten Netzknoten (Nd2) sendet, damit ein Träger (Br) für den einströmenden Datenfluss vom besagten zweiten Netzknoten (Nd2) an den besagten ersten Netzknoten (Nd1) hergestellt wird;
∘ die besagte Tunnelendpunkt-ID, die für den entsprechenden Endpunkt-Einheit Prozessor (PR2, PR2', PR2", PR3''') ausgewählt wurde, anzeigt.
- wobei der besagte Front-End Prozessor (PR1) so ausgelegt ist, dass er:
∘ die Nutzerebene (U) vom besagten zweiten Netzknoten (Nd2) über den Träger empfängt, für den die besagte Tunnelendpunkt-ID ausgewählt wurde;
∘ die Nutzerebene (U) des besagten Trägers zu einem Endpunkt-Einheit Prozessor (PR2, PR2', PR2", PR2''') durch den virtuellen Pfad leitet, der der Teilmenge (S) entspricht, bestehend aus der besagten Tunnelendpunkt-ID;
- wobei die besagten Endpunkt-Einheit Prozessoren (PR2, PR2', PR2", PR2''') so ausgelegt sind, dass sie die vom besagten Front-End Prozessor (PR1) empfangene Nutzerebene verarbeiten.

2. Ein erster Netzknoten (Nd1) gemäß Anspruch 1, wobei die Nutzerebene über GPRS Tunneling Protocol (GTP) Tunnel transportiert wird.

3. Ein erster Netzknoten (Nd1) gemäß Anspruch 1 oder 2, wobei eine oder eine Vielfalt von Mengen (SB) der Tunnelendpunkt-ID für eine oder eine Vielfalt von IP-Adressen dem ersten Netzknoten (Nd1) zugeordnet wird.

4. Ein erster Netzknoten (Nd1) gemäß einem der vorstehenden Ansprüche, wobei es sich bei dem ersten Netzknoten (Nd1) um eine Funkzugangsstelle des Funkzugangsnetzes handelt.

5. Ein erster Netzknoten (Nd1) gemäß Anspruch 4, wobei es sich bei dem zweiten Netzknoten (Nd2) um eine Funkzugangsstelle des Funkzugangsnetzes handelt.

6. Ein erster Netzknoten (Nd1) gemäß Anspruch 4, wobei es sich bei dem zweiten Netzknoten (Nd2) um einen Netzknoten des erweiterten Packet-Core handelt.

7. Ein erster Netzknoten (Nd1) gemäß einem der Ansprüche 1 bis 3, wobei es sich bei dem ersten Netzknoten (Nd1) um einen Netzknoten des erweiterten Packet-Core und bei dem zweiten Netzknoten (Nd2) um eine Funkzugangsstelle des Funkzugangsnetzes handelt.

8. Eine Methode (M) für die Verwaltung der Nutzerebene (U) über eine Vielfalt von Trägern (Br), die für den einströmenden Datenfluss von einem zweiten Netzknoten (Nd2) eines drahtlosen Netzwerks zu einem ersten Netzknoten (Nd1) des besagten drahtlosen Netzwerks hergestellt wird, wobei das drahtlose Netzwerk aus einem Funkzugangsnetz und einem erweiterten Packet-Core besteht, der besagte erste Netzknoten (Nd1) bestehend aus einer ersten Prozessor-Einheit (PR0), einem Front-End Prozessor (PR1) sowie Endpunkt-Einheit Prozessoren (PR2, PR2', PR2", PR3'''), wobei die besagte Methode folgendes umfasst:
- Definition von Teilmengen (S) für zusammenhängende Tunnelendpunkt-IDs innerhalb einer Menge (SB) von Tunnelendpunkt-IDs;
- Zuordnung einer Teilmenge (S) von zusammenhängenden Tunnelendpunkt-IDs zu jedem Endpunkt-Einheit Prozessor (PR2, PR2', PR2", PR2''') zur Bestimmung eines virtuellen Pfades für den einströmenden Datenfluss mittels mindestens eines Bits der zusammenhängenden Tunnelendpunkt-IDs;
- Wahl einer Tunnelendpunkt-ID innerhalb einer Teilmenge (S) und das Versenden der besagten Tunnelendpunkt-ID an den besagten zweiten Netzknoten (Nd2), damit ein Träger (Br) für den besagten einströmenden Datenfluss vom besagten zweiten Netzknoten (Nd2) an den besagten ersten Netzknoten (Nd1) hergestellt wird;
- Anzeige der besagten Tunnelendpunkt-ID, die für den entsprechenden Endpunkt-Einheit Prozessor (PR2, PR2', PR2", PR3''') ausgewählt wurde.
- Weiterleitung der Nutzerebene (U) des besagten Trägers zu einem Endpunkt-Einheit Prozessor (PR2, PR2', PR2", PR2''') durch den virtuellen Pfad, der der Teilmenge (S) entspricht, bestehend aus der besagten Tunnelendpunkt-ID; und
- Verarbeitung der Nutzereben, die vom besagten Front-End Prozessor (PR1) empfangen wurden.

9. Ein Computerprogramm (PG), mit einer Reihe von Anweisungen, das bei dem Betrieb durch einen ersten Netzknoten (Nd1) eines drahtlosen Netzwerks, dazu führt, dass der erste Netzknoten (Nd1) die Methode für die Verwaltung der Nutzerebene gemäß Anspruch 8 ausführt.

10. Ein nicht transistorisches computerlesbares Speichermedium, das ein Computerprogramm (PG) umfasst, mit einer Reihe von Anweisungen, das bei dem Betrieb durch einen ersten Netzknoten (Nd1) eines drahtlosen Netzwerks, dazu führt, dass dieser erste Netzknoten (Nd1) die Methode für die Verwaltung der Nutzerebene gemäß Anspruch 8 ausführt.

## Revendications

1. Premier noeud (Nd1) d'un réseau sans fil comprenant un réseau d'accès radio et un coeur réseau EPC, ledit premier noeud (Nd1) étant adapté pour gérer un plan utilisateur (U) d'une pluralité de porteurs (Br) établis pour un flux d'entrée depuis un deuxième noeud (Nd2) dudit réseau sans fil vers ledit premier noeud (Nd1), ledit premier noeud (Nd1) comprenant un premier processeur (PRO), un processeur amont (PR1) et une pluralité de processeurs aval (PR2, PR2', PR2", PR2''') :
- ledit premier processeur (PR0) étant adapté pour :
o définir des sous-ensembles (S) d'identifiants aval de tunnel contigus dans un ensemble (SB) d'identifiants aval de tunnel ;
o allouer un sous-ensemble (S) d'identifiants aval de tunnel contigus à chaque processeur aval (PR2, PR2', PR2", PR2''') pour définir un chemin virtuel pour ledit flux d'entrée au moyen d'au moins un bit des identifiants aval de tunnel contigus ;
o choisir un identifiant aval de tunnel dans un sous-ensemble (S) et envoyer ledit identifiant aval de tunnel audit deuxième noeud (Nd2) pour établir un porteur (Br) pour ledit flux d'entrée depuis ledit deuxième noeud (Nd2) vers ledit premier noeud (Nd1) ;
o signaler ledit identifiant aval de tunnel choisi au processeur d'unité aval (PR2, PR2', PR2", PR2''') correspondant ;
- ledit processeur amont (PR1) étant adapté pour :
o recevoir le plan utilisateur (U) depuis ledit deuxième noeud (Nd2) par le biais du porteur pour lequel a été choisi ledit identifiant aval de tunnel ;
o acheminer le plan utilisateur (U) dudit porteur à un processeur aval (PR2, PR2', PR2", PR2''') par le biais du chemin virtuel correspondant au sous-ensemble (S) comprenant ledit identifiant aval de tunnel ;
- lesdits processeurs aval (PR2, PR2', PR2", PR2''') étant adaptés pour traiter le plan utilisateur reçu depuis ledit processeur amont (PR1).

2. Premier noeud (Nd1) selon la revendication 1, dans lequel le plan utilisateur est transporté sur des tunnels à protocole de tunnelisation GPRS, GTP.

3. Premier noeud (Nd1) selon la revendication 1 ou la revendication 2, dans lequel un ou une pluralité d'ensembles (SB) d'identifiants aval de tunnel sont associés pour une ou une pluralité d'adresses IP associées au premier noeud (Nd1).

4. Premier noeud (Nd1) selon l'une quelconque des revendications précédentes, dans lequel le premier noeud (Nd1) est un point d'accès radio du réseau d'accès radio.

5. Premier noeud (Nd1) selon la revendication 4, dans lequel le deuxième noeud (Nd2) est un point d'accès radio du réseau d'accès radio.

6. Premier noeud (Nd1) selon la revendication 4, dans lequel le deuxième noeud (Nd2) est un noeud du réseau coeur EPC.

7. Premier noeud (Nd1) selon l'une quelconque des revendications précédentes 1 à 3, dans lequel le premier noeud (Nd1) est un noeud du réseau coeur EPC et le deuxième noeud (Nd2) est un point d'accès radio du réseau d'accès radio.

8. Procédé (M) pour gérer un plan utilisateur (U) transmis sur une pluralité de porteurs (Br) établis pour un flux d'entrée depuis un deuxième noeud (Nd2) d'un réseau sans fil vers un premier noeud (Nd1) dudit réseau sans fil, ledit réseau sans fil comprenant un réseau d'accès radio et un réseau coeur EPC, ledit premier noeud (Nd1) comprenant une première unité de processeur (PRO), un processeur amont (PR1) et des processeurs aval (PR2, PR2', PR2", PR2'''), ledit procédé comprenant :
- la définition de sous-ensembles (S) d'identifiants aval de tunnel contigus dans un ensemble (SB) d'identifiants aval de tunnel ;
- l'allocation d'un sous-ensemble (S) d'identifiants aval de tunnel contigus à chaque processeur aval (PR2, PR2', PR2", PR2''') pour définir un chemin virtuel pour un flux d'entrée au moyen d'au moins un bit des identifiants aval de tunnel contigus ;
- le choix d'un identifiant aval de tunnel dans un sous-ensemble (S) et l'envoi dudit identifiant aval de tunnel audit deuxième noeud (Nd2) pour établir un porteur (Br) pour ledit flux d'entrée depuis ledit deuxième noeud (Nd2) vers ledit premier noeud (Nd1) ;
- la signalisation dudit identifiant aval de tunnel choisi audit processeur aval (PR2, PR2', PR2", PR2''') correspondant ;
- la réception du plan utilisateur (U) depuis ledit deuxième noeud (Nd2) par le biais du porteur pour lequel ledit identifiant aval de tunnel a été choisi ;
- l'acheminement du plan utilisateur (U) dudit porteur vers un processeur aval (PR2, PR2', PR2", PR2''') par le biais du chemin virtuel correspondant au sous-ensemble (S) comprenant ledit identifiant aval de tunnel ; et
- le traitement du plan utilisateur reçu depuis ledit processeur amont (PR1).

9. Produit programme d'ordinateur (PG) comprenant un ensemble d'instructions, qui, lorsqu'il est exécuté par un premier noeud (Nd1) d'un réseau sans fil, amène ledit premier noeud (Nd1) à réaliser le procédé pour gérer le plan utilisateur, selon la revendication 8.

10. Support lisible par ordinateur non transitoire comprenant un produit programme d'ordianteur (PG) comprenant un ensemble d'instructions, qui, lorsqu'il est exécuté par un premier noeud (Nd1) d'un réseau sans fil, amène ledit premier noeud (Nd1) à réaliser le procédé pour gérer le plan utilisateur, selon la revendication 8.
